# EUROPÄISCHE PATENTSCHRIFT

(11) **EP 3 492 191 B1**
(45) Veröffentlichungstag und Bekanntmachung des Hinweises auf die Patenterteilung: **30.04.2025**
(21) Anmeldenummer: 18209999.4
(22) Anmeldetag: 04.12.2018
(51) Int. Cl.: B21D 35/00, F41H 1/02

(54) **VERFAHREN ZUM HERSTELLEN EINER KÖRPERPANZERUNG**
METHOD FOR MANUFACTURING A REINFORCEMENT
PROCÉDÉ DE FABRICATION D'UNE ARMURE DE CORPS

(30) Priorität: 04.12.2017 DE 102017128764
(43) Veröffentlichungstag der Anmeldung: 05.06.2019
(73) Patentinhaber: Mehler Engineered Defence GmbH, 38154 Königslutter (DE)
(72) Erfinder: Vahldiek, Christian, 38364 Schöningen (DE); Krieger, Frank, 38350 Helmstedt (DE)
(74) Vertreter: Gramm, Lins & Partner Patent- und Rechtsanwälte PartGmbB

(56) Entgegenhaltungen:
- CH-A- 213 275
- JP-A- H03 258 423

## Beschreibung

Die Erfindung betrifft ein Verfahren zum Herstellen einer Körperpanzerung mit mehreren Panzerungselementen, die miteinander verbunden sind.

Derartige Körperpanzerungen sind aus dem Stand der Technik seit langem bekannt. Es gibt sie in unterschiedlichen Ausführungsformen, durch die ein Körper gegen unterschiedliche Bedrohungen geschützt werden kann. Körperpanzerungen können als Kleidungsstücke, beispielsweise Westen oder Jacken ausgebildet sein oder als feststehende Elemente vorliegen. Prinzipiell sind auch Rüstungen denkbar.

Eine Körperpanzerung verfügt heute in der Regel über mehrere Panzerungselemente, die miteinander verbunden sind. Die Verbindung erfolgt dabei in gelenkiger Weise, um dem Träger der Körperpanzerung eine möglichst uneingeschränkte Bewegungsfreiheit zu ermöglichen. Dabei muss jedoch sichergestellt sein, dass insbesondere an den Verbindungsstellen der Panzerungselemente und den Zwischenräumen zwischen zwei miteinander verbundenen Panzerungselementen dennoch der durch die Körperpanzerung zu erreichende Schutz gewährleistet wird.

Körperpanzerungen der hier beschriebenen Art können als stich- und hiebfeste Panzerungen, beispielsweise in Form von stich- und/oder hiebfesten Westen oder Jacken ausgebildet sein. Prinzipiell sind aber auch schusssichere Körperpanzerungen möglich.

Die verschiedenen Panzerungselemente bestehen aus einem Material, das für die jeweilige Bedrohung, die durch die Körperpanzerung abgewehrt werden soll, ausgewählt wird. Insbesondere bei hieb- und/oder stichfesten Körperpanzerungen werden Metallplatten, vorzugsweise Aluminiumplatten, verwendet, die als Panzerungselement dienen. Bei anderen Körperpanzerungen können auch faserverstärkte Kunststoffe, Kompositmaterialien oder Keramikelemente verwendet werden.

Um ein möglichst angenehmes Tragegefühl für den Träger der Körperpanzerung zu ermöglichen und diesen in seiner Bewegungsfreiheit möglichst wenig einzuschränken, sind die Panzerungselemente an eine Körperform eines Menschen angepasst. Wird die Körperpanzerung in Form eines Kleidungsstückes ausgeführt, können unterschiedliche Konfektionsgrößen und unterschiedliche "Schnittmuster" für Männer und Frauen ausgebildet werden. Die Panzerungselemente werden in unterschiedlichen geometrischen Konturen und Formen ausgebildet, beispielsweise geschnitten oder gestanzt, wobei die Panzerungselemente flächig ausgebildet und im Wesentlichen zweidimensional sind. Anschließend werden sie beispielsweise durch Umformverfahren wie Walz- oder Tiefziehverfahren in die jeweilige dreidimensionale Form gebracht, die für ihre Verwendung als Panzerungselement notwendig ist.

Nachteilig ist, dass mit steigender Anzahl der Panzerungselemente, die für einen hohen Tragekomfort notwendig ist, der Aufwand zum Herstellen einer solchen Körperpanzerung stark ansteigt, da unterschiedlichste dreidimensionale Formen verwendet werden müssen, um die einzelnen Panzerungselemente in die gewünschte Form zu bringen.

Aus der CH 213275 A ist eine Stichschutzweste bekannt, die aus einer Vielzahl von quadratischen Plättchen besteht, die gelenkig aneinander angeordnet werden. Die Plättchen können zwar gebogen ausgebildet werden, durch die besondere Art der Herstellung und Anordnung der Plättchen untereinander bilden sich zwischen zwei Plättchen jedoch Spalten unterschiedlichen Spaltmaßes, sodass das Eindringen einer insbesondere schlanken Klinge gegebenenfalls nicht sicher verhindert werden kann. Aus der JP H03 258 423 A ist ein Verfahren bekannt, mit dem mehrere Karosserie-Bauteile gleichzeitig in einem Stanz- und Pressverfahren hergestellt werden können.

Der Erfindung liegt daher die Aufgabe zugrunde, ein Verfahren zum Herstellen einer Körperpanzerung so zu verbessern, dass es schneller und kostengünstig herstellbar ist.

Die Erfindung gemäß dem Anspruch 1 löst die gestellte Aufgabe durch ein Verfahren zum Herstellen einer Körperpanzerung mit mehreren Panzerungselementen, die miteinander verbunden sind, wobei das Verfahren folgende Schritte aufweist:
a) Bereitstellen eines Panzerungsrohlings, der wenigstens zwei Panzerungselemente aufweist, die miteinander verbunden oder fest zueinander positioniert sind,
b) Umformen des Panzerungsrohlings in mindestens einer Umformeinrichtung derart, dass die wenigstens zwei Panzerungselemente umgeformt werden, wobei der Panzerungsrohling in unterschiedlichen Bereichen über unterschiedliche Krümmungsradien verfügt,
c) Trennen der wenigstens zwei miteinander verbundenen Panzerungselemente voneinander und
d) Gelenkiges Verbinden der getrennten Panzerungselemente wobei die wenigstens zwei Panzerungselemente des Panzerungsrohlings in einer

Anordnung zueinander verbunden sind, in der sie im Verfahrensschritt d) auch gelenkig miteinander verbunden werden.

Durch die erfindungsgemäße Ausgestaltung des Verfahrens wird erreicht, dass die einzelnen Panzerungselemente nicht separat und in einzelnen Umformschritten in die gewünschte Form gebracht werden müssen. Vielmehr ist es möglich, die Panzerungselemente, die Teil des Panzerungsrohlings sind, gemeinsam umzuformen, wodurch die Anzahl der benötigten Umformschritte stark reduziert und damit die Herstellungszeit und somit auch die Herstellungskosten gesenkt werden können. Zudem ist dadurch sichergestellt, dass die verschiedenen Panzerungselemente in der späteren Körperpanzerung in optimaler Weise aufeinander angepasst und abgestimmt sind.

Die einzelnen Panzerungselemente sind im verfahrensschritt a) miteinander verbunden oder fest zueinander positioniert. Dadurch wird erreicht, dass die einzelnen Panzerungselemente im Verfahrensschritt b) in einer vorbestimmten Weise verformt werden. Die feste Positionierung der Panzerungselemente zueinander kann beispielsweise erreicht werden, indem die einzelnen Panzerungselemente auf oder an einer Unterlage fixiert werden. Dadurch können sie sich während des Umformens des Panzerungsrohlings nicht relativ zueinander bewegen. Die Unterlage kann Fixierungselemente, beispielsweise Befestigungselemente oder Aussparungen in Form der einzelnen Panzerungselemente nach Art eines Puzzles aufweisen. Alternativ oder zusätzlich können die Panzerungselemente auch beispielsweise mittels eines lösbaren Klebers an der Unterlage befestigt werden.

Vorteilhafterweise werden im Verfahrensschritt d) die Panzerungselemente miteinander gelenkig verbunden, die im Verfahrensschritt c) voneinander getrennt wurden. Besonders vorteilhafterweise sind die wenigstens zwei Panzerungselemente des Panzerungsrohlings in einer Anordnung zueinander verbunden, in der sie im Verfahrensschritt d) auch gelenkig miteinander verbunden werden.

Vorteilhafterweise verfügt der Panzerungsrohling über eine möglichst große Anzahl von Panzerungselementen, beispielsweise vier, fünf, sechs oder acht. Je größer die Anzahl der Panzerungselemente ist, die in dem Panzerungsrohling miteinander verbunden sind, desto stärker wird die Anzahl der benötigten Umformschritte zum Herstellen der Körperpanzerung verringert. In einer bevorzugten Ausgestaltung verfügt der Panzerungsrohling bereits über alle für die Körperpanzerung notwendigen Panzerungselemente. In einer Körperpanzerung werden die einzelnen Panzerungselemente in einer bestimmten Anordnung zueinander gelenkig miteinander verbunden. Dabei sind die Seitenkanten und geometrischen Formelemente der benachbarten Panzerungselemente, die auf das jeweilige Nachbarelement zuweisen, aufeinander angepasst, um die gewünschten Eigenschaften insbesondere auch im Zwischenraum zwischen den benachbarten Panzerungselementen aufrechterhalten zu können. In diesem Bereich müssen die Panzerungselemente daher möglichst optimal in ihrer geometrischen Form und dreidimensionalen Gestalt aufeinander abgestimmt sein, um beispielsweise bei stichfesten Körperpanzerungen zu vermeiden, dass im Falle eines Angriffes mit einer Stichwaffe diese in den Zwischenraum zwischen zwei Panzerungselementen eindringen und den Träger der Körperpanzerung verletzen kann. Eine genaue Abstimmung und sorgfältige Formgestaltung der einzelnen Segmente an ihren jeweils benachbarten Seitenkanten ist daher unerlässlich. Dies wird durch das gemeinsam Umformen von wenigstens zwei Panzerungselementen im Panzerungsrohling, bevorzugt natürlich möglichst vielen, besonders bevorzugten allen Panzerungselementen des Panzerungsrohlings, gewährleistet.

Vorzugsweise sind die wenigstens zwei Panzerungselemente im Panzerungsrohling stoffschlüssig miteinander verbunden, insbesondere miteinander verschweißt oder verklebt oder einstückig ausgebildet. Besonders bevorzugt wird der Panzerungsrohling vor dem Bereitstellen aus einer Metallplatte insbesondere einer Aluminiumplatte hergestellt, insbesondere geschnitten oder gestanzt. Dabei können Laserschneidverfahren oder Wasserschneidverfahren ebenso zum Einsatz kommen wie Stanz- oder herkömmliche Schneidverfahren. Bevorzugt werden dabei die einzelnen Panzerungselemente aus einem plattenförmigen Element, beispielsweise der Metallplatte, herausgeschnitten, wobei sie über Stege miteinander verbunden bleiben oder an diesen Stellen wieder miteinander verbunden werden. Besonders bevorzugt sind die miteinander verbundenen Panzerungselemente bereits in der Lage und Orientierung zueinander miteinander verbunden, in der sie auch in der fertigen Körperpanzerung miteinander verbunden sind. Werden die Panzerungselemente zunächst separat hergestellt und anschließend, vorzugsweise stoffschlüssig, miteinander verbunden, lässt sich der gegebenenfalls anfallende Verschnitt reduzieren, so dass die Herstellungskosten in dieser Hinsicht weiter reduziert werden können. Allerdings wird durch das anschließende Verbinden der Panzerungselemente zum Panzerungsrohling ein weiterer Verfahrensschritt notwendig.

Die Stege oder Elemente, über die die Panzerungselemente innerhalb des Panzerungsrohlings miteinander verbunden sind, werden im Verfahrensschritt c) aufgetrennt, so dass die einzelnen Panzerungselemente voneinander gelöst sind. Anschließend werden sie gelenkig miteinander vorzugsweise in der gleichen Orientierung und Anordnung miteinander verbunden.

Die Umformeinrichtung weist vorzugsweise eine Walzeinrichtung mit wenigstens einer Umformwalze auf oder ist bevorzugt eine Walzeinrichtung mit wenigstens einer Umformwalze. Die Umformwalze weist vorteilhafterweise unterschiedliche Krümmungsradien auf. Unterschiedliche Krümmungsradien können dabei in unterschiedlichen Umfangsbereichen der Umformwalze auftreten, so dass die Umformwalze in diesen Bereichen keinen kreisförmigen Querschnitt aufweist. Alternativ oder zusätzlich dazu kann die Umformwalze auch entlang ihrer axialen Richtung unterschiedliche Krümmungsradien aufweisen, so dass ein Längsschnitt kein Rechteck ist.

Selbstverständlich lassen sich die beiden Anordnungen kombinieren, so dass sehr unregelmäßig geformte Umformwalzen verwendet werden können. Damit lässt sich eine vollständige dreidimensionale Umformung der einzelnen Panzerungselemente erreichen, ohne dass separate und zusätzliche Umformschritte notwendig sind. Besonders bevorzugt erfolgt das Umformen des Panzerungsrohlings in nur einem einzigen Umformschritt. Dadurch wird die Anzahl der benötigten Schritte auf das Minimum reduziert und das Herstellverfahren weiter verkürzt.

Zusätzlich kann die Umformeinrichtung weitere Einrichtungen, beispielsweise wenigstens eine Presseinrichtung und/oder wenigstens eine Tiefzieheinrichtung und/oder wenigstens eine Stanzeinrichtung aufweisen. Bevorzugt wird zum Umformen des Panzerungsrohlings in wenigstens einer dieser Einrichtungen, bevorzugt in allen vorhandenen Einrichtungen lediglich ein Umformschritt benötigt, um die gewünschte Form des Panzerungsrohlings zu erreichen.

Bei einer Körperpanzerung, die nach einem der hier beschriebenen Verfahren herstellbar oder hergestellt ist, handelt es sich vorzugsweise um eine Schutzkleidung, insbesondere eine Schutzweste, eine Schutzjacke, ein Armschutzelement, ein Beinschutzelement oder ein Tiefschutzelement. Mit einer derartigen Schutzkleidung sind vorteilhafterweise die einzelnen miteinander gelenkig verbundenen Panzerungselemente integriert, so dass sie von außen nicht sichtbar sind.

Mit Hilfe der beiliegenden Zeichnungen wird nachfolgend ein Ausführungsbeispiel der vorliegenden Erfindung näher erläutert. Es zeigt:
- Figur 1: - einen Panzerungsrohling,
- Figur 2: - die Panzerungselemente des Panzerungsrohlings aus Figur 1 im verbundenen Zustand,
- Figur 3: - eine andere Ausgestaltung eines Panzerungsrohlings,
- Figur 4: - einen vergrößerten Ausschnitt aus Figur 3,

- Figur 5: - den Panzerungsrohling aus Figur 3 im umgeformten Zustand,
- Figur 6: - die voneinander getrennten Panzerungselemente des Panzerungsrohlings aus Figur 5 und
- Figur 7: - zwei Panzerungselemente und eine Unterlage.

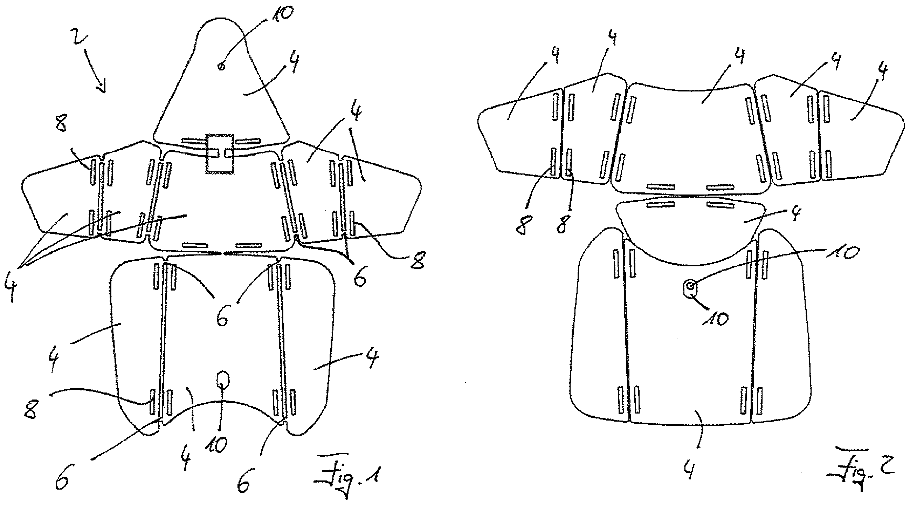

Figur 1 zeigt einen Panzerungsrohling 2, der über mehrere Panzerungselemente 4 verfügt, die über Verbindungsstege 6 miteinander verbunden sind. Der Panzerungsrohling 2 aus Figur 1 beinhaltet alle Panzerungselemente 4, die im gezeigten Ausführungsbeispiel für ein Schulterelement einer Körperpanzerung notwendig sind. Figur 2 zeigt die Panzerungselemente 4, wie sie in der Körperpanzerung aneinander angeordnet werden. Die oberen mittleren Panzerungselemente 4 sind in der gleichen Orientierung und Anordnung zueinander positioniert, wie sie bereits im in Figur 1 gezeigten Panzerungsrohling 2 angeordnet waren. Alle Panzerungselemente 4 in den Figuren 1 und 2 verfügen über Schlitze 8, die so angeordnet sind, dass die Schlitze 8 von jeweils zwei nebeneinander angeordneten Panzerungselementen 4 parallel zueinander verlaufen. In diese Schlitze 8 werden Verbindungselemente eingesetzt, die eine gelenkige Verbindung der einzelnen Panzerungselemente 4 in der in Figur 2 gezeigten Anordnung erlauben. Zwei der Panzerungselemente aus Figur 1 verfügen zudem über jeweils ein weiteres Verbindungselement 10, durch die diese beiden Panzerungselemente 4 miteinander verbunden werden können. Dies ist in Figur 2 dargestellt. Die beiden Verbindungselemente 10 verbinden die beiden Panzerungselemente 4 in der gezeigten Ausführungsform. Die in Figur 1 unten dargestellten drei Panzerungselemente 4 sind relativ zueinander zwar in der richtigen Anordnung gezeigt, werden jedoch in der späteren Körperpanzerung in der in Figur 2 gezeigten Orientierung angeordnet, also um 180° verdreht. Die Anordnung aus Figur 1 des Panzerungsrohlings 2 wird gewählt, um einen möglichen Verschnitt zu reduzieren.

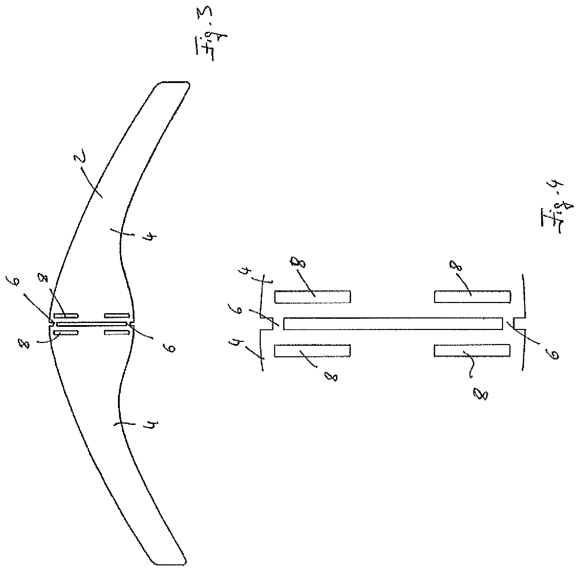

Figur 3 zeigt schematisch einen weiteren Panzerungsrohling 2, der über zwei Panzerungselemente 4 verfügt, die wieder über Verbindungsstege 6 miteinander verbunden sind. Dabei kann es sich um Klebepunkt, Schweißverbindungen oder einstückige Stege handeln, die aus dem gleichen Material hergestellt sind, wie der Panzerungsrohling 2. Jedes der Panzerungselemente 4 verfügt über Schlitze 8, die im gezeigten Ausführungsbeispiel parallel zueinander angeordnet sind. Dieser Teil wird in Figur 4 vergrößert dargestellt. Die Schlitze 8 sind bereits in der Positionierung angeordnet, die für eine spätere Verbindung der voneinander getrennten Panzerungselemente 4 notwendig sind. Die Verbindungsstege 6 im gezeigten Ausführungsbeispiel sind einstückig mit den Panzerungselementen 4 ausgebildet, da die Panzerungselemente 4 und damit der Panzerungsrohling 2 aus einer einstückigen Aluminiumplatte herausgeschnitten wurden.

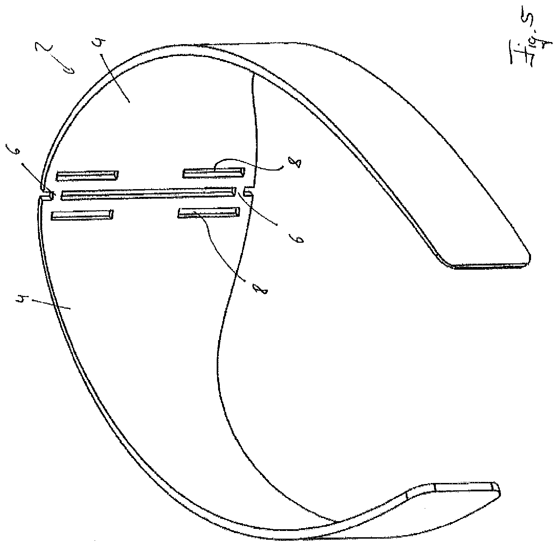

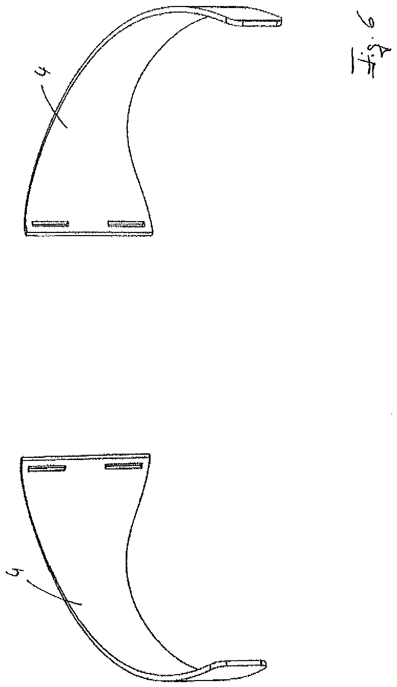

Figur 5 zeigt den Panzerungsrohling 2 aus Figur 3 nach dem Umformen. Man erkennt, dass von der zweidimensionalen ebenen Gestaltung aus Figur 3 eine gebogene Ausgestaltung in Figur 5 wurde. Dies kann beispielsweise durch einen Umformschritt mit einer Walzeinrichtung geschehen. Der Panzerungsrohling 2 verfügt in unterschiedlichen Bereichen über unterschiedliche Krümmungsradien. Auch dies kann in einem einzigen Umformschritt erreicht werden, indem beispielsweise die Umformwalze über unterschiedliche Umfangsradien verfügt. Im nächsten Verfahrensschritt werden die Panzerungselemente 4 voneinander getrennt. Dies ist in Figur 6 dargestellt. Die Verbindungsstege 6 wurden entfernt, so dass die Panzerungselemente 4 voneinander separiert sind. Die Panzerungselemente 4 werden über aus dem Stand der Technik bekannte Verbindungselemente miteinander gelenkig verbunden, um eine Beweglichkeit des Trägers der Körperpanzerung zu erreichen.

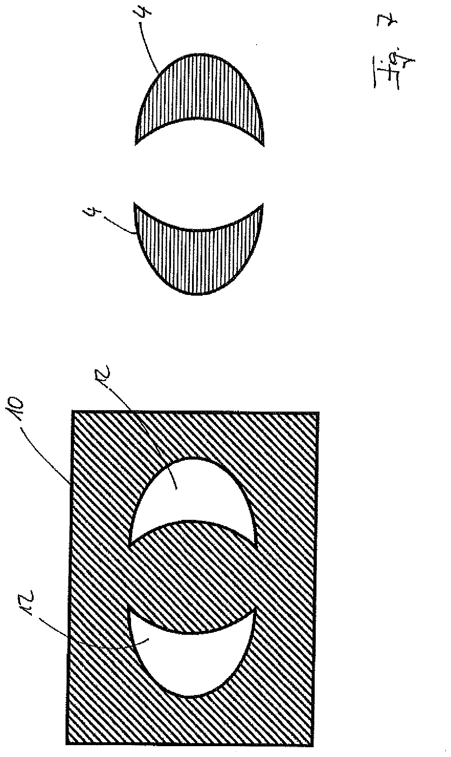

Figur 7 zeigt zwei Panzerungselemente 4 und eine Unterlage 10. Die Unterlage 10 verfügt über zwei Ausnehmungen 12, in die die Panzerungselemente einsetzt werden können. Da die Ausnehmungen 12 in Form und Größe an die Panzerungselemente 4 angepasst sind, können sich die Panzerungselemente 4 in den Ausnehmungen 12 nicht bewegen und sich insbesondere nicht relativ zueinander verschieben, so dass sie fest zueinander positioniert sind.

### Bezugszeichenliste

- 2: Panzerungsrohling
- 4: Panzerungselement
- 6: Verbindungssteg
- 8: Schlitz
- 10: Unterlage
- 12: Ausnehmung

## Patentansprüche

1. Verfahren zum Herstellen einer Körperpanzerung mit mehreren Panzerungselementen (4), die miteinander verbunden sind, wobei das Verfahren folgende Schritte aufweist:
a) Bereitstellen eines Panzerungsrohlings (2), der wenigstens zwei Panzerungselemente (4) aufweist, die miteinander verbunden oder fest zueinander positioniert sind,
b) Umformen des Panzerungsrohlings (2) in mindestens einer Umformeinrichtung derart, dass die wenigstens zwei Panzerungselemente (4) umgeformt werden, wobei der Panzerungsrohling (2) in unterschiedlichen Bereichen über unterschiedliche Krümmungsradien verfügt,
c) Trennen der wenigstens zwei miteinander verbundenen Panzerungselemente (4) voneinander und
d) Gelenkiges Verbinden der getrennten Panzerungselemente (4),
wobei die wenigstens zwei Panzerungselemente (4) des Panzerungsrohlings (2) in einer Anordnung zueinander verbunden sind, in der sie im Verfahrensschritt d) auch gelenkig miteinander verbunden werden.

2. Verfahren nach Anspruch 1, **dadurch gekennzeichnet, dass** im Verfahrensschritt d) die Panzerungselemente (4) miteinander gelenkig verbunden werden, die im Verfahrensschritt c) voneinander getrennt wurden.

3. Verfahren nach einem der vorstehenden Ansprüche, **dadurch gekennzeichnet, dass** die wenigstens zwei Panzerungselemente (4) im Panzerungsrohling (2) stoffschlüssig miteinander verbunden, insbesondere miteinander verschweißt oder verklebt oder einstückig ausgebildet, sind.

4. Verfahren nach einem der vorstehenden Ansprüche, **dadurch gekennzeichnet, dass** der Panzerungsrohling (2) vor dem Bereitstellen aus einer Metallplatte, insbesondere einer Stahlplatte, hergestellt, insbesondere geschnitten oder gestanzt, wird.

5. Verfahren nach einem der vorstehenden Ansprüche, **dadurch gekennzeichnet, dass** die Umformeinrichtung eine Walzeinrichtung mit wenigstens einer Umformwalze aufweist, vorzugsweise eine Walzeinrichtung mit wenigstens einer Umformwalze ist.

6. Verfahren nach Anspruch 5, **dadurch gekennzeichnet, dass** die wenigstens eine Umformwalze verschiedene Krümmungsradien aufweist.

7. Verfahren nach einem der vorstehenden Ansprüche, **dadurch gekennzeichnet, dass** das Umformen des Panzerungsrohlings (2) in nur einem Umformschritt erfolgt.

## Claims

1. Method for producing a body armor with several armor elements (4) that are connected to one another, wherein the method comprises the following steps:
a) providing an armor blank (2) with at least two armor elements (4) which are connected to one another or positioned in a fixed position relative to one another,
b) reshaping of the armor blank (2) in at least one reshaping unit such that the at least two armor elements (4) are reshaped,
c) separation of the at least two connected armor elements (4) from one another and
d) connection of the separated armor elements (4) articulately,
wherein the at least two armor elements (4) or the armor blank (2) are connected relative to one another in an arrangement in which they are also aniculately connected with one another in step d) of the method.

2. Method according to claim 1, **characterized by** the fact that in step d) of the method, the armor elements (4) that have been separated from one another in step c) of the method are flexibly connected to one another.

3. Method according to one of the above claims, **characterized by** the fact that the at least two armor elements (4) of the armor blank (2) are firmly bonded with one another, in particular they are welded or stuck together, or are configured as a single piece.

4. Method according to one of the above claims, **characterized by** the fact that, prior to its supply, the armor blank (2) is produced - in particular cut or punched - from a metal plate, in particular an steel plate.

5. Method according to one of the above claims, **characterized by** the fact that the reshaping device comprises a rolling device with at least one reshaping roller or is preferably a rolling device with at least one reshaping roller.

6. Method according to claim 5, **characterized by** the fact that the at least one reshaping roller features different radii of curvature.

7. Method according to one of the above claims, **characterized by** the fact that the reshaping of the armor blank (2) occurs in a single reshaping step.

## Revendications

1. Procédé de fabrication d'une armure pour le corps, comprenant plusieurs éléments d'armure (4) reliés entre eux, le procédé comprenant les étapes suivantes consistant à :
a) fournir une ébauche d'armure (2) comprenant au moins deux éléments d'armure (4) reliés entre eux ou positionnés de manière fixe l'un par rapport à l'autre,
b) déformer l'ébauche d'armure (2) dans au moins un dispositif de déformation, de manière à déformer lesdits au moins deux éléments d'armure (4), l'ébauche d'armure (2) présentant des rayons de courbure différents dans différentes zones,
c) séparer lesdits au moins deux éléments d'armure (4) reliés entre eux, et
d) relier de manière articulée les éléments d'armure séparés (4),
lesdits au moins deux éléments d'armure (4) de l'ébauche d'armure (2) étant reliés entre eux selon une disposition dans laquelle on les relie entre eux également de manière articulée dans l'étape d) du procédé.

2. Procédé selon la revendication 1,
**caractérisé en ce que** dans l'étape d) du procédé, on relie les éléments d'armure (4) entre eux de manière articulée, qui ont été séparés l'un de l'autre dans l'étape c) du procédé.

3. Procédé selon l'une des revendications précédentes,
**caractérisé en ce que** lesdits au moins deux éléments d'armure (4) dans l'ébauche d'armure (2) sont reliés entre eux par coopération de matière, en particulier soudés ou collés entre eux ou formés d'une seule pièce.

4. Procédé selon l'une des revendications précédentes,
**caractérisé en ce qu'**avant de fournir l'ébauche d'armure (2), on la réalise en particulier par découpe ou par poinçonnage à partir d'une plaque métallique, en particulier à partir d'une plaque d'acier.

5. Procédé selon l'une des revendications précédentes,
**caractérisé en ce que** le dispositif de déformation comporte un dispositif de laminage ayant au moins un cylindre de déformation, et **en ce qu'**il est de préférence un dispositif de laminage ayant au moins un cylindre de déformation.

6. Procédé selon la revendication 5,
**caractérisé en ce que** ledit au moins un cylindre de déformation présente différents rayons de courbure.

7. Procédé selon l'une des revendications précédentes,
**caractérisé en ce que** la déformation de l'ébauche d'armure (2) est effectuée en une seule étape de déformation.
